# EUROPEAN PATENT SPECIFICATION

(11) **EP 3 780 306 B1**
(45) Date of publication and mention of the grant of the patent: **09.07.2025**
(21) Application number: 20188265.1
(22) Date of filing: 28.07.2020
(51) Int. Cl.: H02J 1/12, H02J 3/38

(54) **MULTI-CHANNEL MPPT INVERTER AND METHOD FOR CONTROLLING THE SAME**
MEHRKANALIGER MPPT-WECHSELRICHTER UND VERFAHREN ZU DESSEN STEUERUNG
ONDULEUR DE MPPT À CANAUX MULTIPLES ET SON PROCÉDÉ DE COMMANDE

(30) Priority: 09.08.2019 CN 201910735516
(43) Date of publication of application: 17.02.2021
(73) Proprietor: Sungrow Power Supply Co., Ltd., Hefei, Anhui 230088 (CN)
(72) Inventor: Tao, Tinghuan, Hefei, Anhui 230088 (CN); Geng, Houlai, Hefei, Anhui 230088 (CN); Zhang, Tao, Hefei, Anhui 230088 (CN); Zheng, Qun, Hefei, Anhui 230088 (CN); Li, Haitao, Hefei, Anhui 230088 (CN)
(74) Representative: Zacco Norway AS

(56) References cited:
- WO-A1-2014/147771
- CN-B- 105 871 324
- DE-A1- 102013 111 075
- US-A1- 2009 284 240
- US-A1- 2019 173 379

## Description

### TECHNICAL FIELD

The present disclosure relates to the technical field of power electronics, and in particular to a multi-channel MPPT inverter and a method for controlling the multi-channel MPPT inverter.

### BACKGROUND

A multi-channel MPPT (Maximum Power Point Tracking) inverter includes a DC-AC converter and at least one DC-DC converter. An input terminal of each of the DC-DC converters serves as one of input terminals of the multi-channel MPPT inverter and is connected to a corresponding photovoltaic battery string. Output terminals of all the DC-DC converters are connected together, to connect to a direct current side of the DC-AC converter. An alternating current side of the DC-AC converter serves as an output terminal of the multi-channel MPPT inverter and is connected to an input terminal of an AC power grid.

During an operation of the multi-channel MPPT inverter, each of the DC-DC converters performs DC-DC conversion on an output voltage of the photovoltaic battery string in real time, and then the DC-AC converter performs DC-AC conversion on an output of each of the DC-DC converters to obtain an AC power. The obtained AC power is inputted into the AC power grid, thereby realizing grid connection of a photovoltaic power generation system.

However, the inverter in such two-stage conversion usually has low conversion efficiency.
US2009/284240A1 discloses a method for providing maximum power point tracking for an energy generating device using a local buck-boost converter coupled to the device. The method includes operating in a tracking mode, which includes initializing a conversion ratio for the buck-boost converter based on a previous optimum conversion ratio. A device power associated with the initialized conversion ratio is calculated. The conversion ratio is repeatedly modified and a device power associated with each of the modified conversion ratios is calculated. A current optimum conversion ratio for the buck-boost converter is identified based on the calculated device powers. The current optimum conversion ratio corresponds to one of a buck mode, a boost mode and a buck-boost mode for the buck-boost converter.
US2019/173319A1 discloses a first controller. The first controller controls the DC-DC converter to perform a step-up operation when a voltage on the DC bus is lower than a first reference voltage and controls the DC-DC converter to suspend the step-up operation when the voltage is equal to or higher than the first reference voltage. A second controller controls the inverter to maintain the voltage on the DC bus constant when the voltage on the DC bus is lower than a second reference voltage and controls the inverter to maximize an output power of the inverter when the voltage is equal to or higher than the second reference voltage.

### SUMMARY

In view of the above, a multi-channel MPPT inverter and a method for controlling the multi-channel MPPT inverter are provided in an embodiment of the present disclosure, to solve the problem of low conversion efficiency of the multi-channel MPPT inverter in the conventional technology.

Technical solutions provided by the embodiments of the present disclosure are as follows.

According to one aspect of the present disclosure, a method for controlling a multi-channel MPPT inverter is provided. The method includes:
receiving detection parameters of the multi-channel MPPT inverter;
determining whether each of DC-DC converters in the multi-channel MPPT inverter is in an operating state based on the detection parameters;
determining whether an overall input level of the multi-channel MPPT inverter meets a preset condition for operating under a high input voltage mode based on the detection parameters if each of the DC-DC converters is in the operating state, where the overall input level of the multi-channel MPPT inverter is a parameter characterizing a state of all input voltages of the multi-channel MPPT inverter; and
turning off each of the DC-DC converters, and controlling a DC-AC converter in the multi-channel MPPT inverter to perform an MPPT algorithm, if the overall input level of the multi-channel MPPT inverter meets the preset condition for operating under the high input voltage mode.

The detection parameters include: a voltage of a power grid, a DC bus voltage of the multi-channel MPPT inverter, and an input voltage, an MPPT algorithm command voltage, and an operation state of each of the DC-DC converters in the multi-channel MPPT inverter.

In an embodiment, after determining whether the overall input level of the multi-channel MPPT inverter meets the preset condition for operating under the high input voltage mode based on the detection parameters, the method further includes:
keeping each of the DC-DC converters in performing the MPPT algorithm, if the overall input level of the multi-channel MPPT inverter does not meet the preset condition for operating under the high input voltage mode.

In an embodiment, the preset condition for operating under the high input voltage mode includes at least one of the following:
the DC bus voltage of the multi-channel MPPT inverter is greater than a first preset voltage; and
a difference between an input voltage of each of the DC-DC converters and a peak voltage of a power grid is greater than a second preset voltage, and a difference between a maximum input voltage and a minimum input voltage among input voltages of all the DC-DC converters is less than a third preset voltage.

In an embodiment, the determining whether the overall input level of the multi-channel MPPT inverter meets the preset condition for operating under the high input voltage mode based on the detection parameters includes:
determining whether the DC bus voltage is greater than the first preset voltage;
determining that the overall input level of the multi-channel MPPT inverter meets the preset condition for operating under the high input voltage mode, if the DC bus voltage is greater than the first preset voltage;
determining whether the difference between the input voltage of each of the DC-DC converters and the peak voltage of the power grid is greater than the second preset voltage, if the DC bus voltage is less than or equal to the first preset voltage;
determining that the overall input level of the multi-channel MPPT inverter does not meet the preset condition for operating under the high input voltage mode, if a difference between an input voltage of one of the DC-DC converters and the peak voltage of the power grid is less than or equal to the second preset voltage;
determining whether the difference between the maximum input voltage and the minimum input voltage among the input voltages of all the DC-DC converters is less than the third preset voltage, if the difference between the input voltage of each of the DC-DC converters and the peak voltage of the power grid is greater than the second preset voltage;
determining that the overall input level of the multi-channel MPPT inverter meets the preset condition for operating under the high input voltage mode, if the difference between the maximum input voltage and the minimum input voltage among the input voltages of all the DC-DC converters is less than the third preset voltage; and
determining that the overall input level of the multi-channel MPPT inverter does not meet the preset condition for operating under the high input voltage mode, if the difference between the maximum input voltage and the minimum input voltage among the input voltages of all the DC-DC converters is greater than or equal to the third preset voltage.

In an embodiment, after determining whether each of the DC-DC converters in the multi-channel MPPT inverter is in the operating state, the method further includes:
determining whether an input level difference among all the DC-DC converters meets a preset difference condition based on the detection parameters, if each of the DC-DC converters is not in the operating state;
controlling each of the DC-DC converters to perform the MPPT algorithm, if the input level difference among all the DC-DC converters meets the preset difference condition; and
keeping the DC-AC converter in performing the MPPT algorithm, if the input level difference among all the DC-DC converters does not meet the preset difference condition.

In an embodiment, the preset difference condition includes at least one of the following conditions:
a difference between an input voltage of one of the DC-DC converters and the peak voltage of the power grid is less than a fourth preset voltage;
a difference between input voltages of two of the DC-DC converters is greater than a fifth preset voltage; and
a difference between MPPT algorithm command voltages received by two of the DC-DC converters is greater than a sixth preset voltage.

In an embodiment, the determining whether the input level difference among all the DC-DC converters meets the preset difference condition based on the detection parameters includes:
determining whether a difference between an input voltage of one of the DC-DC converters and the peak voltage of the power grid is less than the fourth preset voltage;
determining that the input level difference among all the DC-DC converters meets the preset difference condition, if the difference between the input voltage of the one of the DC-DC converters and the peak voltage of the power grid is less than the fourth preset voltage;
continuing to determine whether a difference between input voltages of two of the DC-DC converters is greater than the fifth preset voltage, if the difference between the input voltage of each of the DC-DC converters and the peak voltage of the power grid is greater than or equal to the fourth preset voltage;
determining that the input level difference among all the DC-DC converters meets the preset difference condition, if the difference between the input voltages of the two of the DC-DC converters is greater than the fifth preset voltage;
continuing to determine whether a difference between MPPT algorithm command voltages received by two of the DC-DC converters is greater than the sixth preset voltage, if the difference between the input voltages of any two of the DC-DC converters is less than or equal to the fifth preset voltage;
determining that the input level difference among all the DC-DC converters meets the preset difference condition, if the difference between the MPPT algorithm command voltages received by the two of the DC-DC converters is greater than the sixth preset voltage; and
determining that the input level difference among all the DC-DC converters does not meet the preset difference condition, if the difference between MPPT algorithm command voltages received by any two of the DC-DC converters is less than or equal to the sixth preset voltage.

According to another aspect of the present disclosure, a multi-channel MPPT inverter is provided, which includes a DC-AC converter, a controller, and at least one DC-DC converter. An input terminal of each of the DC-DC converters serves as one of input terminals of the multi-channel MPPT inverter and is connected to a corresponding photovoltaic battery string. Output terminals of all the DC-DC converters are connected together to a DC side of the DC-AC converter. An AC side of the DC-AC converter serves as an output terminal of the multi-channel MPPT inverter, and is connected to an input terminal of an AC power grid. An output terminal of the controller is connected to a control terminal of each of the DC-DC converters and a control terminal of the DC-AC converter. The controller is configured to perform any one of the above methods for controlling the multi-channel MPPT inverter.

Compared with the conventional technology, in the method for controlling a multi-channel MPPT inverter according to the present disclosure, after determining that each of DC-DC converters is in an operating state based on the received detection parameters of the multi-channel MPPT inverter, if it is further determined that the overall input level of the multi-channel MPPT inverter meets the preset condition for operating under an high input voltage mode, each of the DC-DC converters is turned off and the DC-AC converter in the multi-channel MPPT inverter is controlled to perform the MPPT algorithm. Therefore, in a case that the photovoltaic battery string outputs a higher voltage due to operating under the high input voltage mode, reactive power by the DC-DC converters at a previous stage is avoided, reducing power loss of the previous stage, and thereby improving the conversion efficiency of the multi-channel MPPT inverter.

### BRIEF DESCRIPTION OF THE DRAWINGS

In order to more clearly illustrate the technical solutions in the embodiments of the present disclosure or in conventional technology, the drawings used in the description of the embodiments or the conventional technology are briefly described below. Apparently, the drawings in the following description show only some embodiments of the present disclosure, and those skilled in the art can obtain other drawings according to the provided drawings without any creative work.
Figure 1 is a flowchart of a method for controlling a multi-channel MPPT inverter according to an embodiment of the present disclosure;
Figure 2 is a flowchart of a method for controlling a multi-channel MPPT inverter according to another embodiment of the present disclosure;
Figure 3 is a flowchart showing a specific implementation of step S130 according to another embodiment of the present disclosure;
Figure 4 is a flowchart showing a specific implementation of step S150 according to another embodiment of the present disclosure; and
Figure 5 is a schematic structural diagram of a multi-channel MPPT inverter according to another embodiment of the present disclosure.

### DETAILED DESCRIPTION OF THE EMBODIMENTS

The technical solutions in the embodiments of the present disclosure are clearly and completely described in the following with reference to the accompanying drawings in the embodiments of the present disclosure.

In the present disclosure, terms "include", "comprise" or any other variants are intended to be non-exclusive. Therefore, a process, method, article, or device including multiple elements includes not only the elements but also other elements that are not enumerated, or also includes elements inherent for the process, method, article or device. Without more limitations, elements defined by the statement "comprising (including)a/an..." does not exclude other similar elements which may exist in the process, method, article or device including such elements.

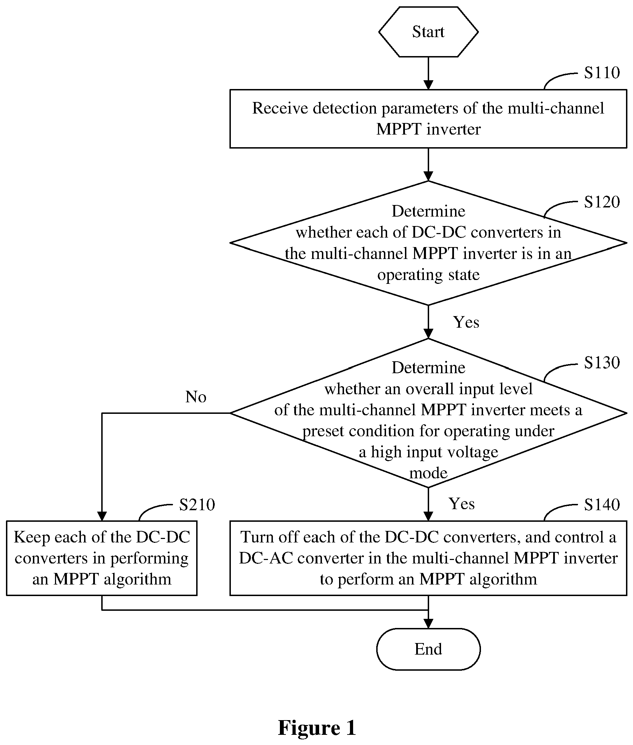

In order to solve the problem of low conversion efficiency of the multi-channel MPPT inverter during operation in the conventional technology, a method for controlling a multi-channel MPPT inverter is provided in an embodiment of the present disclosure. Specifically, as shown in Figure 1, the method includes the following steps S110 to S210.

In step S110, detection parameters of the multi-channel MPPT inverter are received.

The detection parameters of the multi-channel MPPT inverter include: a voltage of a power grid, a DC bus voltage of the multi-channel MPPT inverter, and an input voltage, an MPPT algorithm command voltage, and an operation state of each of DC-DC converters in the multi-channel MPPT inverter.

In step S120, it is determined whether each of the DC-DC converters in the multi-channel MPPT inverter is in an operating state based on the detection parameters of the multi-channel MPPT inverter.

It should be noted that after the multi-channel MPPT inverter is turned on, each of the DC-DC converters should be in an operating state, that is, under control of an MPPT algorithm. If each of the DC-DC converters is in the operating state, proceed to step S130.

In step S130, it is determined whether an overall input level of the multi-channel MPPT inverter meets a preset condition for operating under a high input voltage mode based on the detection parameters.

The overall input level of the multi-channel MPPT inverter is a parameter characterizing a state of all input voltages of the multi-channel MPPT inverter, such as a difference between an input voltage of each of the DC-DC converters and a peak voltage of a power grid if the input voltage of each of the DC-DC converters is distributed within a certain range, or a DC bus voltage of the multi-channel MPPT inverter under influence of the input voltage of each of the DC-DC converters. The parameter may be selected according to specific application environment, which falls within the scope of the present disclosure.

It should be noted that, normally, an input level of each of the DC-DC converters in the multi-channel MPPT inverter, that is, a power generation level of a photovoltaic battery string connected to each of the DC-DC converter, does not largely differ from each other. If an input level of a DC-DC converter is significantly lower than input levels of other DC-DC converters, it indicates that the photovoltaic battery string connected to the DC-DC converter is seriously shaded. If the input levels of most of the DC-DC converters are significantly increased, it indicates that lighting conditions are better at this time, for example, at noon, the power generation levels of the photovoltaic battery strings are high, satisfying the preset condition for operating under the high input voltage mode.

The preset condition for operating under the high input voltage mode may include at least one of the following two conditions.
(1) In a case that the overall input level of the multi-channel MPPT inverter is characterized by the DC bus voltage of the multi-channel MPPT inverter, the preset condition for operating under the high input voltage mode is that the DC bus voltage of the multi-channel MPPT inverter is greater than a first preset voltage.
   The first preset voltage is preset based on electrical parameters of components included in the multi-channel MPPT inverter. Keeping the components included in the multi-channel MPPT inverter unchanged, a larger first preset voltage indicates a higher condition for determining to control each of the DC-DC converters to switch the operation state, and a smaller first preset voltage indicates a lower condition for determining to control each of the DC-DC converters to switch the operation state. Regardless of a larger first preset voltage or a smaller first preset voltage, after the DC bus voltage rises to a certain level, conversion efficiency of maximum static power of the multi-channel MPPT inverter will be reduced.
(2) In a case that the overall input level of the multi-channel MPPT inverter is characterized by input voltages of all the DC-DC converters in the multi-channel MPPT inverter, the preset condition for operating under the high input voltage mode is that: a difference between the input voltage of each of the DC-DC converters and a peak voltage of a power grid is greater than a second preset voltage, and a difference between a maximum input voltage and a minimum input voltage among the input voltages of all the DC-DC converters is less than a third preset voltage.

The second preset voltage is preset according to an actual situation and represents a degree to which the input voltage of each of the DC-DC converters is greater than the peak voltage of the power grid. A larger second preset voltage indicates a greater degree to which the input voltage of each of the DC-DC converters is greater than the peak voltage of the power grid in controlling each of the DC-DC converters to switch the operation state. The third preset voltage is preset according to the actual situation and represents a range within which the input voltage of each of the DC-DC converters is distributed. A smaller third preset voltage indicates a narrower range within which the input voltage of each of the DC-DC converters can be distributed in controlling each of the DC-DC converters to switch the operation state.

If the overall input level of the multi-channel MPPT inverter meets the preset condition for operating under the high input voltage mode, proceed to step S140. If the overall input level of the multi-channel MPPT inverter does not meet the preset condition for operating under the high input voltage mode, proceed to step S210.

In step S140, each of the DC-DC converters is turned off, and a DC-AC converter in the multi-channel MPPT inverter is controlled to perform an MPPT algorithm.

Each of the DC-DC converters is turned off by controlling a switch in each of the DC-DC converters. After turning off each of the DC-DC converters, the DC-DC converter cannot perform the MPPT algorithm on the photovoltaic battery string connected to the DC-DC converter itself, while the DC-AC converter performs the MPPT algorithm on the photovoltaic battery string.

In step S210, each of the DC-DC converters is kept in performing the MPPT algorithm.

It should be noted that step S110 and step S120 in the embodiment may be performed separately according to their own cycles, and the cycles may be the same or different. If the cycles are the same, as a whole, the multi-channel MPPT inverter is controlled once every cycle during the operation of the multi-channel MPPT inverter. If the cycle is set to be minimal, the multi-channel MPPT inverter may be controlled in real time.

Alternatively, step S110, step S120, step S130, step S140, and step S210 may be performed circularly according to the above logic, that is, after performing steps S140 or S210 in the above process, the method returns to perform step S110, forming a loop.

Compared with the conventional technology, in the method for controlling a multi-channel MPPT inverter according to the present disclosure, after determining that each of the DC-DC converters is in an operating state, if it is further determined that the overall input level of the multi-channel MPPT inverter meets the preset condition for operating under the high input voltage mode, each of the DC-DC converters is turned off and the DC-AC converter in the multi-channel MPPT inverter is controlled to perform the MPPT algorithm. Therefore, in a case that the photovoltaic battery string outputs a higher voltage during operating under the high input voltage mode, reactive power by the DC-DC converters at a previous stage is avoided, reducing power loss of the previous stage, and thereby improving the conversion efficiency of the multi-channel MPPT inverter.

It should be noted that, according to another technical solution in the conventional technology, if a maximum input voltage among the input voltages of all the DC-DC converters is greater than the peak voltage of the power grid, then at least one of the DC-DC converters switches its operation state, such that the MPPT algorithm will be performed by the DC-AC converter. However, since such switching condition is less strict, the DC-DC converter in the multi-channel MPPT inverter will frequently switch its operation state during the operation of the multi-channel MPPT inverter. Moreover, it is not limited that each of the DC-DC converters switches the operation state, thus the DC-AC converter cannot perform multi-channel MPPT algorithms simultaneously, resulting in lower conversion efficiency of maximum static power of the multi-channel MPPT inverter.

Compared with the above technical solution in the conventional technology, in the method for controlling a multi-channel MPPT inverter according to the present disclosure, the switching condition is strict, the switching frequency is low, and thus the operating voltage range of multi-channel maximum power point tracking can be increased. Moreover, each of the DC-DC converters is controlled to switch the operation state, achieving higher conversion efficiency of maximum static power.

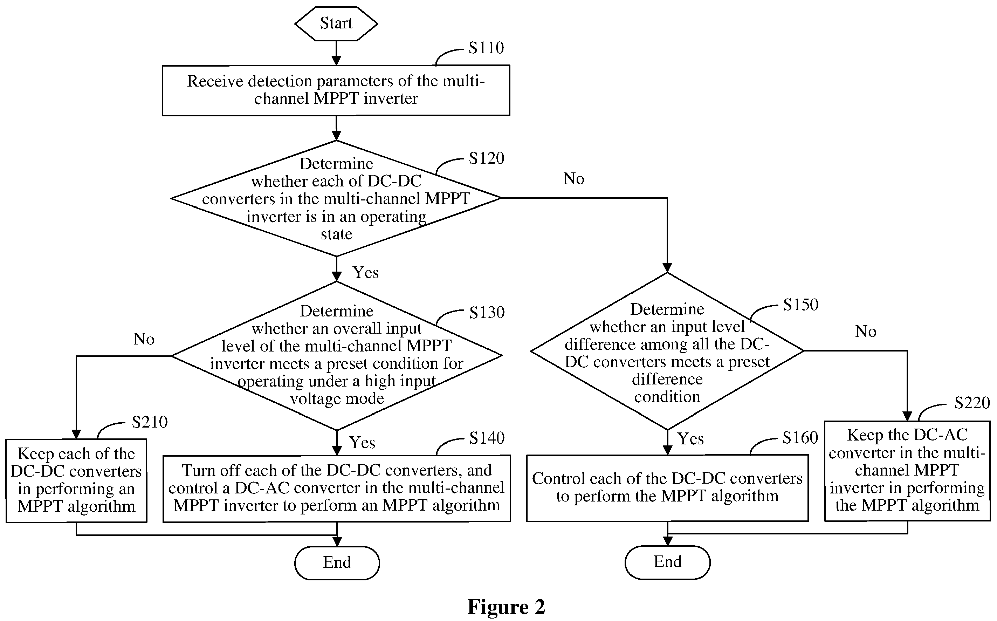

According to another embodiment, a method for controlling a multi-channel MPPT inverter is provided. Based on the above embodiments, after each of the DC-DC converters is controlled to be turned off in step S140, the method in the embodiment circularly proceeds to step S120, and at this time all the DC-DC converters are not in the operating state. Then as shown in Figure 2, the method further includes the following steps S150 to S220.

In step S150, it is determined whether an input level difference among all the DC-DC converters meets a preset difference condition based on the detection parameters.

The input level difference among all the DC-DC converters refers to a difference between the input voltage of each of the DC-DC converters and the peak voltage of the power grid, a difference between the input voltages of all the DC-DC converters, or a difference between MPPT algorithm command voltages received by all the DC-DC converters, which may be selected according to specific application environment and is within the scope of the present disclosure.

In practice, the preset difference condition may include at least one of the following three conditions.
(1) In a case that the input level difference among all the DC-DC converters is characterized by the difference between the input voltage of the DC-DC converter itself and the peak voltage of the power grid, the preset difference condition is that a difference between an input voltage of one of the DC-DC converters and the peak voltage of the power grid is less than a fourth preset voltage.
   The fourth preset voltage is preset according to the actual situation. A smaller fourth preset voltage indicates that an input voltage of a DC-DC converter is closer to the peak voltage of the power grid.
(2) In a case that the input level difference among all the DC-DC converters is characterized by a difference between an input voltage of a DC-DC converter and an input voltage of another DC-DC converter, the preset difference condition is that a difference between input voltages of two of the DC-DC converters is greater than a fifth preset voltage.
   The fifth preset voltage is preset according to the actual situation. A larger fifth preset voltage indicates a larger difference between the input voltages of the two of the DC-DC converters in the multi-channel MPPT inverter, indicating a larger difference between radiant intensities received by two photovoltaic battery strings connected to the two DC-DC converters.
(3) In a case that the input level difference among all the DC-DC converters is characterized by a difference between an MPPT algorithm command voltage received by a DC-DC converter and an MPPT algorithm command voltage received by another DC-DC converter, the preset difference condition is that a difference between MPPT algorithm command voltages received by two of the DC-DC converters is greater than a sixth preset voltage.

The sixth preset voltage is preset according to the actual situation. A larger sixth preset voltage indicates a larger difference between the MPPT algorithm command voltages received by two of the DC-DC converters, and indicates a larger difference between forecasted radiant intensities received by two photovoltaic battery strings connected to the two DC-DC converters.

If the input level difference among all the DC-DC converters meets the preset difference condition, proceed to step S160. If the input level difference among all the DC-DC converters does not meet the preset difference condition, proceed to step S220.

In step S160, each of the DC-DC converters is controlled to perform the MPPT algorithm.

Each of the DC-DC converters is turned on by controlling a switch. After all the DC-DC converters are turned on, each of the DC-DC converters may perform MPPT algorithm on a photovoltaic battery string which is connected to the DC-DC converter itself, to set a maximum power point for the photovoltaic battery string, thus each of the photovoltaic battery strings is operating at the maximum power point.

In step S220, the DC-AC converter in the multi-channel MPPT inverter is kept in performing the MPPT algorithm.

In the embodiment, by lowering the condition for determining to control all the DC-DC converters back to perform MPPT algorithms, the operating voltage range of the multi-channel maximum power point tracking is further increased.

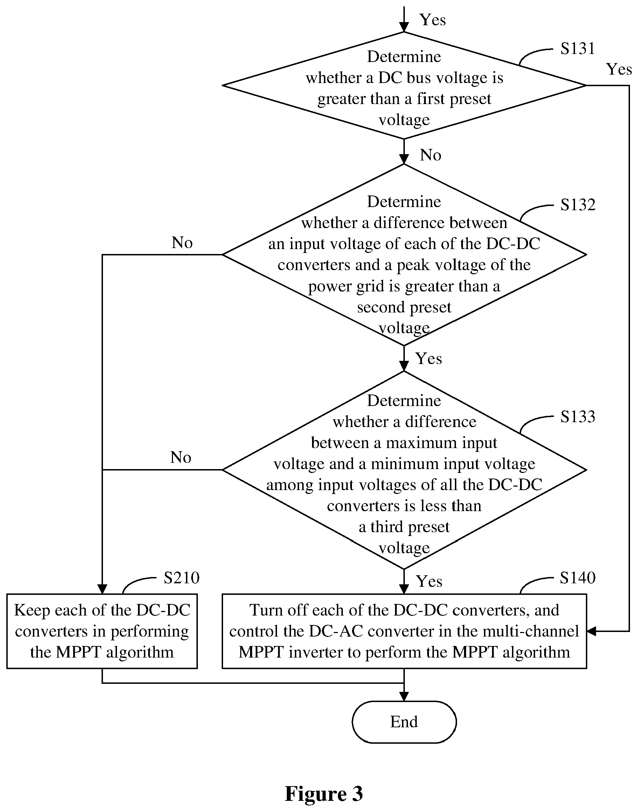

According to another embodiment of the present disclosure, a specific implementation of step S130 is provided. As shown in Figure 3, the implementation includes the following steps S131 to S133.

In step S131, it is determined whether the DC bus voltage is greater than the first preset voltage.

If the DC bus voltage is greater than the first preset voltage, it is determined that the overall input level of the multi-channel MPPT inverter meets the preset condition for operating under the high input voltage mode, and then proceed to step S140. If the DC bus voltage is less than or equal to the first preset voltage, and then proceed to step S132.

In step S132, it is determined whether a difference between the input voltage of each of the DC-DC converters and the peak voltage of the power grid is greater than the second preset voltage.

If the difference between the input voltage of each of the DC-DC converters and the peak voltage of the power grid is greater than the second preset voltage, proceed to step S133. If a difference between an input voltage of at least one of the DC-DC converters and the peak voltage of the power grid is less than or equal to the second preset voltage, it is determined that the overall input level of the multi-channel MPPT inverter does not meet the preset condition for operating under the high input voltage mode, and then proceed to step S210.

In step S133, it is determined whether the difference between a maximum input voltage and a minimum input voltage among the input voltages of all the DC-DC converters is less than the third preset voltage.

If the difference between the maximum input voltage and the minimum input voltage among the input voltages of all the DC-DC converters is less than the third preset voltage, it is determined that the overall input level of the multi-channel MPPT inverter meets the preset condition for operating under the high input voltage mode, and then proceed to step S140. If the difference between the maximum input voltage and the minimum input voltage among the input voltages of all the DC-DC converters is greater than or equal to the third preset voltage, it is determined that the overall input level of the multi-channel MPPT inverter does not meet the preset condition for operating under the high input voltage mode, and then proceed to step S210.

It should be noted that step S131 may be performed after step S132 and step S133, and step S132 may be performed after step S133, which is not specifically limited herein and depends on the specific situation.

In addition, another implementation of step S130 may only include step S131, or only include step S132 and step S133. In a case of only including step S132 and step S133, step S132 may be performed after step S133 or before step S133, which is not specifically limited herein and depends on the specific situation. In addition, the two implementations of step S130 may depend on specific situations and are not specifically limited herein.

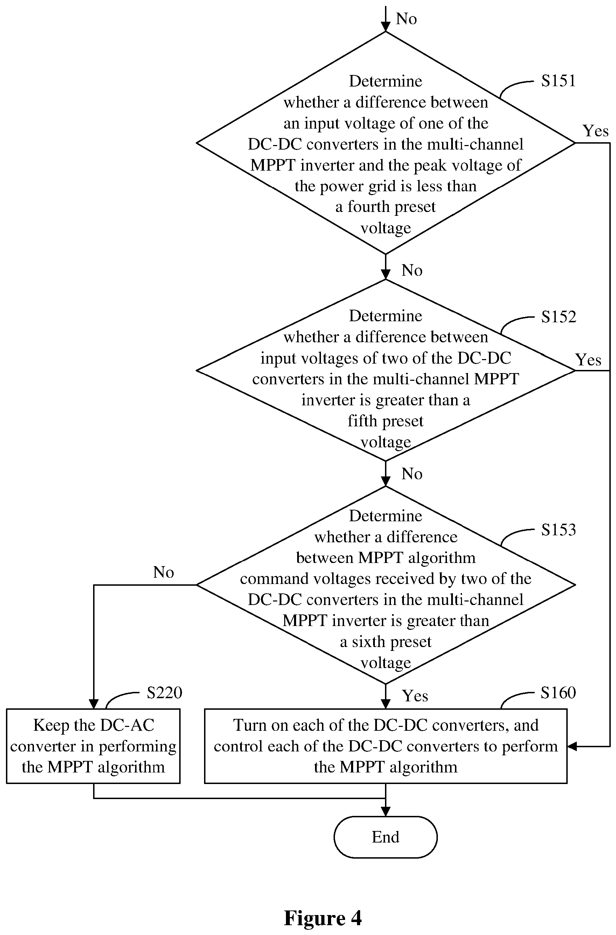

According to another embodiment of the present disclosure, a specific implementation of step S150 is provided. As shown in Figure 4, the implementation includes the following steps S151 to S153.

In step S151, it is determined whether the difference between the input voltage of one of the DC-DC converters in the multi-channel MPPT inverter and the peak voltage of the power grid is less than the fourth preset voltage.

If the difference between the input voltage of the one of the DC-DC converters in the multi-channel MPPT inverter and the peak voltage of the power grid is less than the fourth preset voltage, it is determined that the input level difference among all the DC-DC converters meets the preset difference condition, and then proceed to step S160. If the difference between the input voltage of each of the DC-DC converters in the multi-channel MPPT inverter and the peak voltage of the power grid is greater than or equal to the fourth preset voltage, proceed to step S152.

In step S152, it is determined whether the difference between input voltages of two of the DC-DC converters in the multi-channel MPPT inverter is greater than the fifth preset voltage.

If the difference between the input voltages of the two of the DC-DC converters in the multi-channel MPPT inverter is greater than the fifth preset voltage, it is determined that the input level difference among all the DC-DC converters meets the preset difference condition, and then proceed to step S160. If the difference between the input voltages of any two of the DC-DC converters in the multi-channel MPPT inverter is less than or equal to the fifth preset voltage, then proceed to step S153.

In step S153, it is determined whether the difference between MPPT algorithm command voltages received by two of the DC-DC converters in the multi-channel MPPT inverter is greater than the sixth preset voltage.

If the difference between MPPT algorithm command voltages received by the two of the DC-DC converters in the multi-channel MPPT inverter is greater than the sixth preset voltage, it is determined that the input level difference among all the DC-DC converters meets the preset difference condition, and proceed to step S160. If the difference between MPPT algorithm command voltages received by any two of the DC-DC converters in the multi-channel MPPT inverter is less than or equal to the sixth preset voltage, it is determined that the input level difference among all the DC-DC converters does not meet the preset difference condition, and then proceed to step S220.

It should be noted that the order of step S151, step S152, and step S153 is randomly arranged, which is not specifically limited herein and depends on the specific situation, and is within the protection scope of the present disclosure.

In addition, another implementation of step S150 includes only any one or two of step S151, step S152, and step S153. In a case that the another implementation of step S150 includes only any two of step S151, step S152, and step S153, the order of the two steps is randomly arranged and the two steps may be selected according to the specific situation. In addition, the two implementations of step S150 may depend on specific situations and are not specifically limited herein.

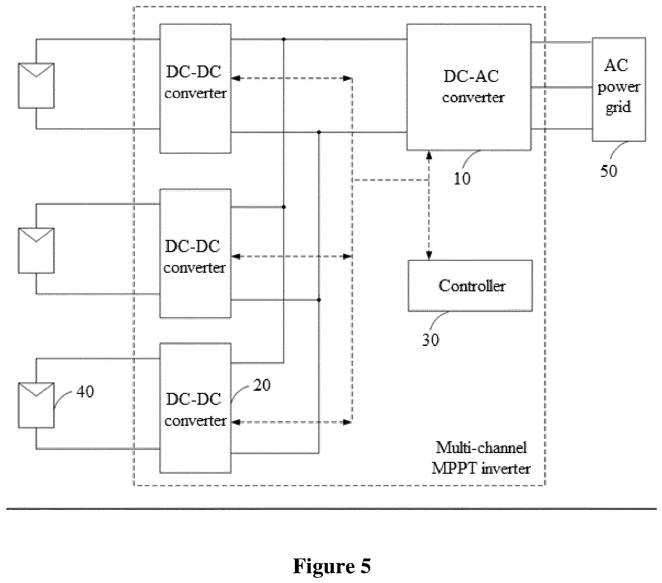

According to another embodiment of the present disclosure, a multi-channel MPPT inverter is provided. Figure 5 shows a schematic structural diagram of the multi-channel MPPT inverter, which includes a DC-AC converter 10, a controller 30, and at least one DC-DC converter 20.

An input terminal of each of the DC-DC converters 20 serves as one of input terminals of the multi-channel MPPT inverter and is connected to a corresponding photovoltaic battery string 40.

An output terminal of each of the DC-DC converters 20 is connected to a DC side of the DC-AC converter 10.

An AC side of the DC-AC converter 10 serves as an output terminal of the multi-channel MPPT inverter, and is connected to an input terminal of an AC power grid 50.

An output terminal of the controller 30 is connected to a control terminal of each of the DC-DC converters 20 and a control terminal of the DC-AC converter 10.

The controller 30 is configured to perform the method for controlling the multi-channel MPPT inverter according to any one of the above embodiments.

It should be noted that the controller 30 may be arranged independently or may be integrated in a control unit within the DC-AC converter, which is not specifically limited herein and depends on the specific situation, and is within the protection scope of the present disclosure.

Embodiments of the present disclosure are described in a progressive manner, each of the embodiments emphasizes differences from other embodiments, and the same or similar parts among the embodiments may be referred to each other. Since device or device embodiments are similar to method embodiments, the description thereof is relatively simple, and reference may be made to the description of the method embodiments for relevant parts. The device or the device embodiment described above is just schematic. A unit described as a separate component may be or may not be separated in physical, and a component displayed as a unit may be or may not be a physical unit, that is, may be placed in a same position or may be distributed in multiple network units.

It may be further known by those skilled in the art that, units and steps in each method described in conjunction with the embodiments disclosed herein can be realized by electronic hardware, computer software, or a combination thereof. In order to clearly illustrate interchangeability of the hardware and the software, steps and composition of each embodiment have been described generally in view of functions in the above specification. Whether the function is executed in a hardware way or in a software way depends on specific application of the technical solution and design constraint condition. Those skilled in the art can use different methods for each specific application to realize the described function, and this is not considered to be beyond the scope of the present disclosure.

## Claims

1. A method for controlling a multi-channel maximum power point tracking MPPT inverter, comprising:
receiving (S110) detection parameters of the multi-channel MPPT inverter;
determining (S120) whether each of DC-DC converters in the multi-channel MPPT inverter is in an operating state based on the detection parameters;
determining (S130) whether an overall input level of the multi-channel MPPT inverter meets a preset condition for operating under a high input voltage mode based on the detection parameters in a case that each of the DC-DC converters is in the operating state, wherein the overall input level of the multi-channel MPPT inverter is a parameter characterizing a state of all input voltages of the multi-channel MPPT inverter; and
turning off (S140) each of the DC-DC converters, and controlling a DC-AC converter in the multi-channel MPPT inverter to perform an MPPT algorithm, in a case that the overall input level of the multi-channel MPPT inverter meets the preset condition for operating under the high input voltage mode;
**characterized in that**, the detection parameters comprise:
a voltage of a power grid, a DC bus voltage of the multi-channel MPPT inverter, and an input voltage of each of the DC-DC converters, an MPPT algorithm command voltage and an operation state of each of the DC-DC converters in the multi-channel MPPT inverter.

2. The method according to claim 1, after determining whether the overall input level of the multi-channel MPPT inverter meets the preset condition for operating under the high input voltage mode based on the detection parameters, further comprising:
keeping (S210) each of the DC-DC converters in performing the MPPT algorithm, in a case that the overall input level of the multi-channel MPPT inverter does not meet the preset condition for operating under the high input voltage mode.

3. The method according to claim 1, wherein the preset condition for operating under the high input voltage mode comprises at least one of the following:
the DC bus voltage of the multi-channel MPPT inverter is greater than a first preset voltage; and
a difference between the input voltage of each of the DC-DC converters and a peak voltage of a power grid is greater than a second preset voltage, and a difference between a maximum input voltage and a minimum input voltage among input voltages of all the DC-DC converters is less than a third preset voltage.

4. The method according to claim 3, wherein the determining whether the overall input level of the multi-channel MPPT inverter meets the preset condition for operating under the high input voltage mode based on the detection parameters comprises:
determining (S131) whether the DC bus voltage is greater than the first preset voltage;
determining that the overall input level of the multi-channel MPPT inverter meets the preset condition for operating under the high input voltage mode, if the DC bus voltage is greater than the first preset voltage;
continuing (S132) to determine whether the difference between the input voltage of each of the DC-DC converters and the peak voltage of the power grid is greater than the second preset voltage, if the DC bus voltage is less than or equal to the first preset voltage;
determining that the overall input level of the multi-channel MPPT inverter does not meet the preset condition for operating under the high input voltage mode, if a difference between an input voltage of at least one of the DC-DC converters and the peak voltage of the power grid is less than or equal to the second preset voltage;
continuing (S133) to determine whether the difference between the maximum input voltage and the minimum input voltage among the input voltages of all the DC-DC converters is less than the third preset voltage, if the difference between the input voltage of each of the DC-DC converters and the peak voltage of the power grid is greater than the second preset voltage;
determining that the overall input level of the multi-channel MPPT inverter meets the preset condition for operating under the high input voltage mode, if the difference between the maximum input voltage and the minimum input voltage among the input voltages of all the DC-DC converters is less than the third preset voltage; and
determining that the overall input level of the multi-channel MPPT inverter does not meet the preset condition for operating under the high input voltage mode, if the difference between the maximum input voltage and the minimum input voltage among the input voltages of all the DC-DC converters is greater than or equal to the third preset voltage.

5. The method according to any one of claims 1 to 4, after determining whether each of the DC-DC converters in the multi-channel MPPT inverter is in the operating state, further comprising:
determining (S150) whether an input level difference among all the DC-DC converters meets a preset difference condition based on the detection parameters, if each of the DC-DC converters is not in the operating state;
controlling (S160) each of the DC-DC converters to perform the MPPT algorithm, if the input level difference among all the DC-DC converters meets the preset difference condition; and
keeping (S220) the DC-AC converter in performing the MPPT algorithm, if the input level difference among all the DC-DC converters does not meet the preset difference condition.

6. The method according to claim 5, wherein the preset difference condition comprises at least one of the following conditions:
a difference between an input voltage of one of the DC-DC converters and a peak voltage of a power grid is less than a fourth preset voltage;
a difference between input voltages of two of the DC-DC converters is greater than a fifth preset voltage; and
a difference between MPPT algorithm command voltages received by two of the DC-DC converters is greater than a sixth preset voltage.

7. The method according to claim 6, wherein the determining whether the input level difference among all the DC-DC converters meets the preset difference condition based on the detection parameters comprises:
determining (S151) whether a difference between an input voltage of one of the DC-DC converters and the peak voltage of the power grid is less than the fourth preset voltage;
determining that the input level difference among all the DC-DC converters meets the preset difference condition, if the difference between the input voltage of the one of the DC-DC converters and the peak voltage of the power grid is less than the fourth preset voltage;
continuing (S152) to determine whether a difference between input voltages of two of the DC-DC converters is greater than the fifth preset voltage, if a difference between an input voltage of each of the DC-DC converters and the peak voltage of the power grid is greater than or equal to the fourth preset voltage;
determining that the input level difference among all the DC-DC converters meets the preset difference condition, if the difference between the input voltages of the two of the DC-DC converters is greater than the fifth preset voltage;
continuing (S153) to determine whether a difference between MPPT algorithm command voltages received by two of the DC-DC converters is greater than the sixth preset voltage, if a difference between input voltages of any two of the DC-DC converters is less than or equal to the fifth preset voltage;
determining that the input level difference among all the DC-DC converters meets the preset difference condition, if the difference between MPPT algorithm command voltages received by the two of the DC-DC converters is greater than the sixth preset voltage; and
determining that the input level difference among all the DC-DC converters does not meet the preset difference condition, if a difference between MPPT algorithm command voltages received by any two of the DC-DC converters is less than or equal to the sixth preset voltage.

8. A multi-channel maximum power point tracking MPPT inverter, comprising: a DC-AC converter (10), a controller (30), and at least one DC-DC converter (20), wherein
an input terminal of each of the DC-DC converters (20) serves as one of input terminals of the multi-channel MPPT inverter and is connected to a corresponding photovoltaic battery string (40);
an output terminal of each of the DC-DC converters (20) is connected to a DC side of the DC-AC converter (10);
an AC side of the DC-AC converter (10) serves as an output terminal of the multi-channel MPPT inverter, and is connected to an input terminal of an AC power grid (50);
an output terminal of the controller (30) is connected to a control terminal of each of the DC-DC converters (20) and a control terminal of the DC-AC converter (10); and
the controller (30) is configured to perform the method for controlling the multi-channel MPPT inverter according to any one of claims 1 to 7.

## Patentansprüche

1. Verfahren zum Steuern eines mehrkanaligen Wechselrichters mit maximaler Leistungspunktverfolgung (maximum power point tracking - MPPT), Folgendes umfassend:
Empfangen (S110) von Erkennungsparametern des mehrkanaligen MPPT-Wechselrichters;
Bestimmen (S120), ob sich jeder der DC-DC-Wandler in dem mehrkanaligen MPPT-Wechselrichter in einem Betriebszustand befindet, basierend auf den Erkennungsparametern;
Bestimmen (S130), ob ein Gesamteingangspegel des mehrkanaligen MPPT-Wechselrichters eine voreingestellte Bedingung für den Betrieb in einem Modus mit hoher Eingangsspannung basierend auf den Erkennungsparametern erfüllt, wenn sich jeder der DC-DC-Wandler im Betriebszustand befindet, wobei der Gesamteingangspegel des mehrkanaligen MPPT-Wechselrichters ein Parameter ist, der einen Zustand aller Eingangsspannungen des mehrkanaligen MPPT-Wechselrichters kennzeichnet; und
Ausschalten (S140) jedes der DC-DC-Wandler und Steuern eines DC-AC-Wandlers in dem mehrkanaligen MPPT-Wechselrichter, um einen MPPT-Algorithmus durchzuführen, wenn der Gesamteingangspegel des mehrkanaligen MPPT-Wechselrichters die voreingestellte Bedingung für den Betrieb in dem Modus mit hoher Eingangsspannung erfüllt;
**dadurch gekennzeichnet, dass** die Erkennungsparameter Folgendes umfassen:
eine Spannung eines Stromnetzes, eine DC-Bus-Spannung des mehrkanaligen MPPT-Wechselrichters und eine Eingangsspannung jedes der DC-DC-Wandler, eine MPPT-Algorithmus-Befehlsspannung und einen Betriebszustand jedes der DC-DC-Wandler in dem mehrkanaligen MPPT-Wechselrichter.

2. Verfahren nach Anspruch 1, das nach dem Bestimmen, ob der Gesamteingangspegel des mehrkanaligen MPPT-Wechselrichters die voreingestellte Bedingung für den Betrieb in dem Modus mit hoher Eingangsspannung basierend auf den Erkennungsparametern erfüllt, ferner Folgendes umfasst:
Halten (S210) jeden der DC-DC-Wandler beim Durchführen des MPPT-Algorithmus, wenn der Gesamteingangspegel des mehrkanaligen MPPT-Wechselrichters die voreingestellte Bedingung für den Betrieb in dem Modus mit hoher Eingangsspannung nicht erfüllt.

3. Verfahren nach Anspruch 1, wobei die voreingestellte Bedingung für den Betrieb in dem Modus mit hoher Eingangsspannung mindestens eines von Folgendem umfasst:
die DC-Bus-Spannung des mehrkanaligen MPPT-Wechselrichters ist größer als eine erste voreingestellte Spannung; und
eine Differenz zwischen der Eingangsspannung jedes der DC-DC-Wandler und einer Spitzenspannung eines Stromnetzes ist größer als eine zweite voreingestellte Spannung, und eine Differenz zwischen einer maximalen Eingangsspannung und einer minimalen Eingangsspannung unter Eingangsspannungen aller DC-DC-Wandler ist kleiner als eine dritte voreingestellte Spannung.

4. Verfahren nach Anspruch 3, wobei das Bestimmen, ob der Gesamteingangspegel des mehrkanaligen MPPT-Wechselrichters die voreingestellte Bedingung für den Betrieb in dem Modus mit hoher Eingangsspannung basierend auf den Erkennungsparametern erfüllt, Folgendes umfasst:
Bestimmen (S131), ob die DC-Bus-Spannung größer als die erste voreingestellte Spannung ist;
Bestimmen, dass der Gesamteingangspegel des mehrkanaligen MPPT-Wechselrichters die voreingestellte Bedingung für den Betrieb in dem Modus mit hoher Eingangsspannung erfüllt, wenn die DC-Bus-Spannung größer als die erste voreingestellte Spannung ist;
Fortfahren (S132) mit dem Bestimmen, ob die Differenz zwischen der Eingangsspannung jedes der DC-DC-Wandler und der Spitzenspannung des Stromnetzes größer als die zweite voreingestellte Spannung ist, wenn die DC-Bus-Spannung kleiner oder gleich der ersten voreingestellten Spannung ist;
Bestimmen, dass der Gesamteingangspegel des mehrkanaligen MPPT-Wechselrichters die voreingestellte Bedingung für den Betrieb in dem Modus mit hoher Eingangsspannung nicht erfüllt, wenn eine Differenz zwischen einer Eingangsspannung von mindestens einem der DC-DC-Wandler und der Spitzenspannung des Stromnetzes kleiner oder gleich der zweiten voreingestellten Spannung ist;
Fortfahren (S133) mit dem Bestimmen, ob die Differenz zwischen der maximalen Eingangsspannung und der minimalen Eingangsspannung unter den Eingangsspannungen aller DC-DC-Wandler kleiner als die dritte voreingestellte Spannung ist, wenn die Differenz zwischen der Eingangsspannung jedes der DC-DC-Wandler und der Spitzenspannung des Stromnetzes größer als die zweite voreingestellte Spannung ist;
Bestimmen, dass der Gesamteingangspegel des mehrkanaligen MPPT-Wechselrichters die voreingestellte Bedingung für den Betrieb in dem Modus mit hoher Eingangsspannung erfüllt, wenn die Differenz zwischen der maximalen Eingangsspannung und der minimalen Eingangsspannung unter den Eingangsspannungen aller DC-DC-Wandler kleiner als die dritte voreingestellte Spannung ist; und
Bestimmen, dass der Gesamteingangspegel des mehrkanaligen MPPT-Wechselrichters die voreingestellte Bedingung für den Betrieb in dem Modus mit hoher Eingangsspannung nicht erfüllt, wenn die Differenz zwischen der maximalen Eingangsspannung und der minimalen Eingangsspannung unter den Eingangsspannungen aller DC-DC-Wandler größer oder gleich der dritten voreingestellten Spannung ist.

5. Verfahren nach einem der Ansprüche 1 bis 4, das nach dem Bestimmen, ob sich jeder der DC-DC-Wandler in dem mehrkanaligen MPPT-Wechselrichter im Betriebszustand befindet, ferner Folgendes umfasst:
Bestimmen (S150), ob eine Eingangspegeldifferenz unter allen DC-DC-Wandlern eine voreingestellte Differenzbedingung basierend auf den Erkennungsparametern erfüllt, wenn sich keiner der DC-DC-Wandler im Betriebszustand befindet;
Steuern (S160) jeden der DC-DC-Wandler, um den MPPT-Algorithmus durchzuführen, wenn die Eingangspegeldifferenz unter allen DC-DC-Wandlern die voreingestellte Differenzbedingung erfüllt; und Halten (S220) des DC-AC-Wandlers beim Durchführen des MPPT-Algorithmus, wenn die Eingangspegeldifferenz unter allen DC-DC-Wandlern die voreingestellte Differenzbedingung nicht erfüllt.

6. Verfahren nach Anspruch 5, wobei die voreingestellte Differenzbedingung mindestens eine der folgenden Bedingungen umfasst:
eine Differenz zwischen einer Eingangsspannung eines der DC-DC-Wandler und einer Spitzenspannung eines Stromnetzes ist kleiner als eine vierte voreingestellte Spannung;
eine Differenz zwischen Eingangsspannungen von zwei der DC-DC-Wandler ist größer als eine fünfte voreingestellte Spannung; und eine Differenz zwischen MPPT-Algorithmus-Befehlsspannungen, die durch zwei der DC-DC-Wandler empfangen werden, ist größer als eine sechste voreingestellte Spannung.

7. Verfahren nach Anspruch 6, wobei das Bestimmen, ob die Eingangspegeldifferenz unter allen DC-DC-Wandlern die voreingestellte Differenzbedingung basierend auf den Erkennungsparametern erfüllt, Folgendes umfasst:
Bestimmen (S151), ob eine Differenz zwischen einer Eingangsspannung eines der DC-DC-Wandler und der Spitzenspannung des Stromnetzes kleiner als die vierte voreingestellte Spannung ist;
Bestimmen, dass die Eingangspegeldifferenz unter allen DC-DC-Wandlern die voreingestellte Differenzbedingung erfüllt, wenn die Differenz zwischen der Eingangsspannung des einen der DC-DC-Wandler und der Spitzenspannung des Stromnetzes kleiner als die vierte voreingestellte Spannung ist;
Fortfahren (S152) mit dem Bestimmen, ob eine Differenz zwischen Eingangsspannungen von zwei der DC-DC-Wandler größer als die fünfte voreingestellte Spannung ist, wenn eine Differenz zwischen einer Eingangsspannung jedes der DC-DC-Wandler und der Spitzenspannung des Stromnetzes größer oder gleich der vierten voreingestellten Spannung ist;
Bestimmen, dass die Eingangspegeldifferenz unter allen DC-DC-Wandlern die voreingestellte Differenzbedingung erfüllt, wenn die Differenz zwischen den Eingangsspannungen der zwei der DC-DC-Wandler größer als die fünfte voreingestellte Spannung ist;
Fortfahren (S153) mit dem Bestimmen, ob eine Differenz zwischen MPPT-Algorithmus-Befehlsspannungen, die durch zwei der DC-DC-Wandler empfangen werden, größer als die sechste voreingestellte Spannung ist, wenn eine Differenz zwischen Eingangsspannungen von zwei beliebigen der DC-DC-Wandler kleiner oder gleich der fünften voreingestellten Spannung ist;
Bestimmen, dass die Eingangspegeldifferenz unter allen DC-DC-Wandlern die voreingestellte Differenzbedingung erfüllt, wenn die Differenz zwischen MPPT-Algorithmus-Befehlsspannungen, die durch die zwei DC-DC-Wandlern empfangen werden, größer als die sechste voreingestellte Spannung ist; und
Bestimmen, dass die Eingangspegeldifferenz unter allen DC-DC-Wandlern die voreingestellte Differenzbedingung nicht erfüllt, wenn eine Differenz zwischen MPPT-Algorithmus-Befehlsspannungen, die durch zwei beliebige der DC-DC-Wandler empfangen werden, kleiner oder gleich der sechsten voreingestellten Spannung ist.

8. Mehrkanaliger Wechselrichter mit maximaler Leistungspunktverfolgung (maximum power point tracking - MPPT), Folgendes umfassend: einen DC-AC-Wandler (10), eine Steuerung (30) und mindestens einen DC-DC-Wandler (20), wobei
ein Eingangsanschluss jedes der DC-DC-Wandler (20) als einer der Eingangsanschlüsse des mehrkanaligen MPPT-Wechselrichters dient und mit einem entsprechenden Photovoltaik-Batteriestrang (40) verbunden ist;
ein Ausgangsanschluss jedes der DC-DC-Wandler (20) mit einer DC-Seite des DC-AC-Wandlers (10) verbunden ist;
eine AC-Seite des DC-AC-Wandlers (10) als Ausgangsanschluss des mehrkanaligen MPPT-Wechselrichters dient und mit einem Eingangsanschluss eines AC-Stromnetzes (50) verbunden ist;
ein Ausgangsanschluss der Steuerung (30) mit einem Steueranschluss jedes der DC-DC-Wandler (20) und einem Steueranschluss des DC-AC-Wandlers (10) verbunden ist; und
die Steuerung (30) konfiguriert ist, um das Verfahren zum Steuern des mehrkanaligen MPPT-Wechselrichters nach einem der Ansprüche 1 bis 7 durchzuführen.

## Revendications

1. Procédé de commande d'un onduleur de suivi du point de puissance maximale, MPPT, multicanal comprenant :
la réception (S110) de paramètres de détection de l'onduleur MPPT multicanal ;
la détermination (S120) si chacun des convertisseurs CC-CC de l'onduleur MPPT multicanal est dans un état de fonctionnement sur la base des paramètres de détection ;
la détermination (S130) si un niveau d'entrée global de l'onduleur MPPT multicanal satisfait une condition prédéfinie pour fonctionner en mode de tension d'entrée élevée en fonction des paramètres de détection dans le cas où chacun des convertisseurs CC-CC est en état de fonctionnement, le niveau d'entrée global de l'onduleur MPPT multicanal étant un paramètre caractérisant un état de toutes les tensions d'entrée de l'onduleur MPPT multicanal ; et
l'éteinte (S140) de chacun des convertisseurs CC-CC et la commande d'un convertisseur CC-CA dans l'onduleur MPPT multicanal pour exécuter un algorithme MPPT, dans le cas où le niveau d'entrée global de l'onduleur MPPT multicanal répond à la condition prédéfinie pour fonctionner en mode de tension d'entrée élevée ;
**caractérisé en ce que** les paramètres de détection comprennent :
une tension d'un réseau électrique, une tension de bus CC de l'onduleur MPPT multicanal et une tension d'entrée de chacun des convertisseurs CC-CC, une tension de commande d'algorithme MPPT et un état de fonctionnement de chacun des convertisseurs CC-CC dans l'onduleur MPPT multicanal.

2. Procédé selon la revendication 1, après avoir déterminé si le niveau d'entrée global de l'onduleur MPPT multicanal satisfait à la condition prédéfinie pour fonctionner en mode haute tension d'entrée sur la base des paramètres de détection, comprenant en outre :
le maintien (S210) de chacun des convertisseurs CC-CC dans l'exécution de l'algorithme MPPT, dans le cas où le niveau d'entrée global de l'onduleur MPPT multicanal ne répond pas à la condition prédéfinie pour fonctionner en mode de tension d'entrée élevée.

3. Procédé selon la revendication 1, dans lequel la condition prédéfinie pour fonctionner en mode de tension d'entrée élevée comprend au moins l'un des éléments suivants :
la tension du bus CC de l'onduleur MPPT multicanal est supérieure à une première tension prédéfinie ; et
une différence entre la tension d'entrée de chacun des convertisseurs CC-CC et une tension de crête d'un réseau électrique est supérieure à une deuxième tension prédéfinie, et une différence entre une tension d'entrée maximale et une tension d'entrée minimale parmi les tensions d'entrée de tous les convertisseurs CC-CC est inférieure à une troisième tension prédéfinie.

4. Procédé selon la revendication 3, dans lequel la détermination si le niveau d'entrée global de l'onduleur MPPT multicanal remplit la condition prédéfinie pour fonctionner en mode haute tension d'entrée sur la base des paramètres de détection comprend :
la détermination (S131) si la tension du bus CC est supérieure à la première tension prédéfinie ;
la détermination que le niveau d'entrée global de l'onduleur MPPT multicanal répond à la condition prédéfinie pour fonctionner en mode de tension d'entrée élevée, si la tension du bus CC est supérieure à la première tension prédéfinie ;
la continuation (S132) de la détermination si la différence entre la tension d'entrée de chacun des convertisseurs CC-CC et la tension de crête du réseau électrique est supérieure à la deuxième tension prédéfinie, si la tension du bus CC est inférieure ou égale à la première tension prédéfinie ;
la détermination que le niveau d'entrée global de l'onduleur MPPT multicanal ne répond pas à la condition prédéfinie pour fonctionner en mode de tension d'entrée élevée, si une différence entre une tension d'entrée d'au moins un des convertisseurs CC-CC et la tension de crête du réseau électrique est inférieure ou égale à la deuxième tension prédéfinie ;
la continuation (S133) de la détermination si la différence entre la tension d'entrée maximale et la tension d'entrée minimale parmi les tensions d'entrée de tous les convertisseurs CC-CC est inférieure à la troisième tension prédéfinie, si la différence entre la tension d'entrée de chacun des convertisseurs CC-CC et la tension de crête du réseau électrique est supérieure à la deuxième tension prédéfinie ;
la détermination que le niveau d'entrée global de l'onduleur MPPT multicanal répond à la condition prédéfinie pour fonctionner en mode de tension d'entrée élevée, si la différence entre la tension d'entrée maximale et la tension d'entrée minimale parmi les tensions d'entrée de tous les convertisseurs CC-CC est inférieure à la troisième tension prédéfinie ; et
la détermination que le niveau d'entrée global de l'onduleur MPPT multicanal ne répond pas à la condition prédéfinie pour fonctionner en mode de tension d'entrée élevée, si la différence entre la tension d'entrée maximale et la tension d'entrée minimale parmi les tensions d'entrée de tous les convertisseurs CC-CC est supérieure ou égale à la troisième tension prédéfinie.

5. Procédé selon l'une quelconque des revendications 1 à 4, après la détermination si chacun des convertisseurs CC-CC de l'onduleur MPPT multicanal est en état de fonctionnement, comprenant en outre :
la détermination (S150) si une différence de niveau d'entrée parmi tous les convertisseurs CC-CC satisfait une condition de différence prédéfinie sur la base des paramètres de détection, si chacun des convertisseurs CC-CC n'est pas dans l'état de fonctionnement ;
la commande (S160) de chacun des convertisseurs CC-CC pour exécuter l'algorithme MPPT, si la différence de niveau d'entrée entre tous les convertisseurs CC-CC répond à la condition de différence prédéfinie ; et
le maintien (S220) du convertisseur CC-CA dans l'exécution de l'algorithme MPPT, si la différence de niveau d'entrée entre tous les convertisseurs CC-CC ne répond pas à la condition de différence prédéfinie.

6. Procédé selon la revendication 5, dans lequel la condition de différence prédéfinie comprend au moins l'une des conditions suivantes :
une différence entre une tension d'entrée d'un des convertisseurs CC-CC et une tension de crête d'un réseau électrique est inférieure à une quatrième tension prédéfinie ;
une différence entre les tensions d'entrée de deux des convertisseurs CC-CC est supérieure à une cinquième tension prédéfinie ; et
une différence entre les tensions de commande de l'algorithme MPPT reçues par deux des convertisseurs CC-CC est supérieure à une sixième tension prédéfinie.

7. Procédé selon la revendication 6, dans lequel la détermination si la différence de niveau d'entrée parmi tous les convertisseurs CC-CC satisfait la condition de différence prédéfinie sur la base des paramètres de détection comprend :
la détermination (S151) si une différence entre une tension d'entrée de l'un des convertisseurs CC-CC et la tension de crête du réseau électrique est inférieure à la quatrième tension prédéfinie ;
la détermination que la différence de niveau d'entrée entre tous les convertisseurs CC-CC satisfait à la condition de différence prédéfinie, si la différence entre la tension d'entrée de l'un des convertisseurs CC-CC et la tension de crête du réseau électrique est inférieure à la quatrième tension prédéfinie ;
la continuation (S152) de la détermination si une différence entre les tensions d'entrée de deux des convertisseurs CC-CC est supérieure à la cinquième tension prédéfinie, si une différence entre une tension d'entrée de chacun des convertisseurs CC-CC et la tension de crête du réseau électrique est supérieure ou égale à la quatrième tension prédéfinie ;
la détermination que la différence de niveau d'entrée entre tous les convertisseurs CC-CC satisfait à la condition de différence prédéfinie, si la différence entre les tensions d'entrée des deux convertisseurs CC-CC est supérieure à la cinquième tension prédéfinie ;
la continuation (S153) de la détermination si une différence entre les tensions de commande de l'algorithme MPPT reçues par deux des convertisseurs CC-CC est supérieure à la sixième tension prédéfinie, si une différence entre les tensions d'entrée de deux quelconques des convertisseurs CC-CC est inférieure ou égale à la cinquième tension prédéfinie ;
la détermination que la différence de niveau d'entrée entre tous les convertisseurs CC-CC répond à la condition de différence prédéfinie, si la différence entre les tensions de commande de l'algorithme MPPT reçues par les deux convertisseurs CC-CC est supérieure à la sixième tension prédéfinie ; et
la détermination que la différence de niveau d'entrée entre tous les convertisseurs CC-CC ne répond pas à la condition de différence prédéfinie, si une différence entre les tensions de commande d'algorithme MPPT reçues par deux des convertisseurs CC-CC est inférieure ou égale à la sixième tension prédéfinie.

8. Onduleur de suivi du point de puissance maximale, MPPT, multicanal comprenant : un convertisseur CC-CA (10), un contrôleur (30) et au moins un convertisseur CC-CC (20), dans lequel
une borne d'entrée de chacun des convertisseurs CC-CC (20) sert de l'une des bornes d'entrée de l'onduleur MPPT multicanal et est connectée à une chaîne de batteries photovoltaïques correspondante (40) ;
une borne de sortie de chacun des convertisseurs CC-CC (20) est connectée à un côté CC du convertisseur CC-CA (10) ;
un côté CA du convertisseur CC-CA (10) sert de borne de sortie de l'onduleur MPPT multicanal et est connecté à une borne d'entrée d'un réseau électrique CA (50) ;
une borne de sortie du contrôleur (30) est connectée à une borne de commande de chacun des convertisseurs CC-CC (20) et à une borne de commande du convertisseur CC-CA (10) ; et
le contrôleur (30) est configuré pour réaliser le procédé de commande de l'onduleur MPPT multicanal selon l'une quelconque des revendications 1 à 7.
